# EUROPEAN PATENT APPLICATION

(11) **EP 2 439 874 A1**
(43) Date of publication of application: **11.04.2012**
(21) Application number: 09845404.4
(22) Date of filing: 15.06.2009
(51) Int. Cl.: H04L 12/00

(54) **RADIO FREQUENCY IDENTIFICATION DEVICE**

(30) Priority: 03.06.2009 CN 200910085991
(71) Applicant: Potevio Institute Of Technology Co., Ltd., Haidian District Beijing 100-080 (CN)
(72) Inventor: ZHANG, Yuhong, Beijing 100080 (CN); WANG, Xiaojun, Beijing 100080 (CN); YAO, Bin, Beijing 100080 (CN); CHANG, Ying, Beijing 100080 (CN); LIU, Daobin, Beijing 100080 (CN); LI, Lizheng, Beijing 100080 (CN); YANG, Muxiang, Beijing 100080 (CN); LIU, Hongwei, Beijing 100080 (CN)
(74) Representative: Kraenzmer, Martin
(86) International application number: PCT/CN2009/072280
(87) International publication number: WO 2010/139123

(57) **Abstract**

A radio frequency identification device includes: a radio frequency interface, a core control unit and a universal storage interface; the radio frequency interface and the universal storage interface connected respectively with the core control unit; the core control unit is used to receive radio frequency identification instruction from other radio frequency identification devices or portable terminal apparatus within predetermined range by the universal storage interface or the radio frequency interface, and perform corresponding radio frequency identification processing according to the radio frequency identification instruction and the current work state of the devices; when the instruction is work state switching instruction, the work state of the devices is switched; the work state is a radio frequency tag state or a radio frequency reader state; the radio frequency interface is used to realize information interaction between the core control unit and the other radio frequency identification devices within predetermined range; the universal storage interface is used to realize information interaction between the portable terminal apparatus and the core control unit.

## Description

### FIELD OF THE INVENTION

The present invention relates to radio frequency technique, and in particular relates to a radio frequency identification apparatus and a radio frequency identification method.

### BACKGROUND OF THE INVENTION

Currently, Radio Frequency Identification (RFID) technique is widely used: it may be used in electronic purses or various tickets for security and convenience; may be used in identifying identity of an object for the purpose of anti-faking; or may be a substitute for trademark to provide various information on the trademark and information besides the trademark. The prior radio frequency identification technique needs a radio frequency tag and a radio frequency reader to be implemented, where the radio frequency reader, which consists of a RFID reading chip, an antenna, a microprocessor, a display, a memory, button(s), a shell, a power supply and the like, involves high cost, therefore it is often deployed only in enterprises or special organizations but not be popularized in most ordinary consumers, which prevents the popularization and application of the radio frequency identification technique.

For further popularization and application of the radio frequency identification technique, a combination of the radio frequency identification technique and the mobile phone that has only the communication function has been proposed in some technical solutions. Based on the high popularizing rate of the mobile phone, most ordinary consumers are enabled to carry RFID tag and radio frequency reader around, so as to utilize the electronic purses and various tickets at anytime and anywhere, verify the authenticity of the products, learn product-related information, or the like.

There are two prior solutions for implementing the combination of the RFID technique and the mobile phone. One solution is to modify the mobile phone to be capable of radio frequency identification function. For example, a SIM card radio frequency antenna device for mobile communication terminal is disclosed in CN Patent No. 200620133544.6, which device includes a radio frequency antenna, a radio frequency antenna accessory, and a flexible connection element. The radio frequency antenna accessory is adapted to bear the radio frequency antenna and fix the radio frequency antenna at the outer side of the battery of the mobile terminal. The flexible connection element is adapted to connect the radio frequency antenna to the SIM card located at the inner side of the battery of the mobile communication terminal. Utilizing this, while maintaining the telecommunication function, non-telecommunication function may be implemented in the mobile communication terminal for some users, with only some extra cost and without purchasing a new mobile phone or customizing a special mobile phone back cover. The technique solution proposed in this patent requires reformation of the mobile communication terminal, and requires customization of the antenna and the flexible connection element for the mobile phone of each user. However, the embedding of the radio frequency antenna and the flexible connection element into the mobile communication terminal is complicated in process, difficult in implementation and high in cost, which will affect the rapid popularization and application of this approach to a great extent. Furthermore, this solution is restricted by the inner structure of the mobile phone to a great extent, and thus does not have universality.

The other solution is to embed a radio frequency module into the storage card. For example, a storage card embedded with a radio frequency module is disclosed in CN200510100762.X. The radio frequency module may be a radio frequency reader, or may be a radio frequency tag. This solution needs no reformation of the existing mobile phone, thus the problems of high cost and poor universality in the previous solution may be overcome. However, since the function that may be integrated in the card is limited, only one form of the radio frequency reader or the radio frequency tag can be selected; due to the fact that the two forms can not exist at the same time, it is not possible to achieve the two functions with one storage card, and therefore, if the user needs not only the function of the radio frequency tag but also the function of the radio frequency reader, the user has to possess another storage card embedded with the function module of the radio frequency reader or the function module of the radio frequency tag as well. It is not convenient for the user, and not favorable for the popularization and the application.

It can be seen that the prior technical solutions of combining the RFID technique and the mobile phone have the problems of high cost, difficulty in popularization and application, and the like.

### SUMMARY OF THE INVENTION

In view of this, the major object of the present invention is to provide a radio frequency identification apparatus and a radio frequency identification method, which integrate both the functions of the radio frequency tag and the radio frequency reader, and facilitate the incorporation with existing portable terminal devices.

To achieve the above objects, the present invention proposes the following solutions.

A radio frequency identification apparatus, including a radio frequency interface, a core control unit and a universal storage interface, the radio frequency interface and the universal storage interface being connected respectively with the core control unit, wherein:

the core control unit is adapted to receive a radio frequency identification instruction from another radio frequency identification apparatus within a predetermined range or a portable terminal device through the universal storage interface or the radio frequency interface, to perform a corresponding radio frequency identification processing according to the radio frequency identification instruction and a current operation status of the apparatus, and to switch the operation status of the apparatus if the instruction is an operation status switching instruction, wherein the operation status is a radio frequency tag status or a radio frequency reader status;

the radio frequency interface is adapted to implement information interaction between the core control unit and the another radio frequency identification apparatus within the predetermined range; and

the universal storage interface is adapted to implement information interaction between the portable terminal device and the core control unit.

Preferably, the core control unit includes a storage control unit, a storage unit and a radio frequency control unit; wherein:

the storage control unit is adapted to receive the radio frequency identification instruction from the universal storage interface, to parse a radio frequency control instruction and send the parsed radio frequency control instruction to the radio frequency control unit if the radio frequency identification instruction is the radio frequency control instruction, and if the radio frequency identification instruction is a radio frequency security identification instruction, to parse the radio frequency security identification instruction and perform security processing on the parsed radio frequency security identification instruction, and to send the result of the security processing to the radio frequency control unit or the storage unit or to send the result of the security processing to the portable terminal device through the universal storage interface; and is adapted to receive a radio frequency security identification instruction from the radio frequency control unit, to parse the radio frequency security identification instruction and perform security processing on the parsed radio frequency security identification instruction, and to send the result of the security processing to the radio frequency control unit or the storage unit or to send the result of the security processing to the portable terminal device through the universal storage interface;

the radio frequency control unit is adapted to execute the radio frequency control instruction sent by the storage control unit, and if the radio frequency control instruction is the operation status switching instruction, to set the operation status of the apparatus according to the switching instruction; is adapted to transmit the radio frequency security identification instruction, which is sent from the radio frequency interface and is originated from the another radio frequency identification apparatus within the predetermined range, to the storage control unit; and is adapted to send the result of the security processing fed back by the storage control unit to the another radio frequency identification apparatus within the predetermined range corresponding to the result of the security processing through the radio frequency interface; and

the storage unit is adapted to provide the storage control unit with data required for operation of the storage control unit or to store a corresponding operation result.

Preferably, the storage control unit is further adapted to receive a data access instruction from the universal storage interface and execute the data access instruction; to receive a security processing instruction from the universal storage interface, to perform security processing on the parsed security processing instruction, and to feed the result of the security processing to the portable terminal device through the universal storage interface.

Preferably, the core control unit includes a storage control unit, a storage unit, a radio frequency control unit and a security processing unit, wherein:

the storage control unit is adapted to receive the radio frequency identification instruction from the universal storage interface, to parse a radio frequency control instruction and send the parsed radio frequency control instruction to the radio frequency control unit if the radio frequency identification instruction is the radio frequency control instruction, and if the radio frequency identification instruction is a radio frequency security identification instruction, to parse the radio frequency security identification instruction and send the parsed radio frequency security identification instruction to the security processing unit for security processing, and to send the result of the security processing to the radio frequency control unit or the storage unit or to send the result of the security processing to the portable terminal device through the universal storage interface; and is adapted to receive a radio frequency security identification instruction from the radio frequency control unit, to parse the radio frequency security identification instruction and send the parsed radio frequency security identification instruction to the security processing unit for security processing, and to send the result of the security processing to the radio frequency control unit or the storage unit or to send the result of the security processing to the portable terminal device through the universal storage interface;

the radio frequency control unit is adapted to execute the radio frequency control instruction sent by the storage control unit, and if the radio frequency control instruction is the operation status switching instruction, to set the operation status of the apparatus according to the switching instruction; is adapted to transmit the radio frequency security identification instruction, which is sent from the radio frequency interface and is originated from the another radio frequency identification apparatus within the predetermined range, to the storage control unit; and is adapted to send the result of the security processing fed back by the storage control unit to the another radio frequency identification apparatus within the predetermined range corresponding to the result of the security processing through the radio frequency interface;

the security processing unit is adapted to perform the security processing on an instruction sent by the storage control unit and to feed the result back to the storage control unit; and

the storage unit is adapted to provide the storage control unit with data required for operation of the storage control unit or to store a corresponding operation result.

Preferably, the core control unit includes a storage control unit, a storage unit, a radio frequency control unit and a security processing unit, wherein:

the storage control unit is adapted to receive the radio frequency identification instruction from the universal storage interface, to parse a radio frequency control instruction and send the parsed radio frequency control instruction to the security processing unit if the radio frequency identification instruction is the radio frequency control instruction, and if the radio frequency identification instruction is a radio frequency security identification instruction, to parse the radio frequency security identification instruction and send the parsed radio frequency security identification instruction to the security processing unit for security processing, and to send the result of the security processing from the security processing unit to the storage unit or to send the result of the security processing to the portable terminal device through the universal storage interface;

the radio frequency control unit is adapted to execute the radio frequency control instruction forwarded by the security processing unit, and if the radio frequency control instruction is the operation status switching instruction, to set the operation status of the apparatus according to the switching instruction; is adapted to transmit the radio frequency security identification instruction, which is sent from the radio frequency interface and is originated from the another radio frequency identification apparatus within the predetermined range, to the security processing unit; and is adapted to send the result of the security processing sent by the security processing unit to the another radio frequency identification apparatus within the predetermined range corresponding to the result of the security processing through the radio frequency interface;

the security processing unit is adapted to perform security processing on the radio frequency security identification instruction sent by the storage control unit or by the radio frequency control unit, and to send the result of the security processing to the storage control unit or the radio frequency control unit; and is adapted to forward the radio frequency control instruction sent by the storage control unit to the radio frequency control unit; and

the storage unit is adapted to provide the storage control unit with data required for operation of the storage control unit or to store a corresponding operation result.

Preferably, the storage control unit is further adapted to receive a data access instruction from the universal storage interface and execute the data access instruction; to receive a security processing instruction from the universal storage interface, to send the parsed security processing instruction to the security processing unit for security processing, and to feed the result of the security processing to the portable terminal device through the universal storage interface.

To sum up, in the radio frequency identification apparatus provided by the present invention, by utilizing the radio frequency control unit to control the rapid switching between the radio frequency reader status and the radio frequency tag status, the functions of the radio frequency tag and the radio frequency reader are both integrated into one radio frequency identification apparatus, so that no modification to the hardware structure of the portable terminal is needed when incorporating the radio frequency identification apparatus into the portable terminal device, which is beneficial for decreasing the cost for combining the radio frequency identification technique with the existing portable terminal device, and facilitates popularization and application of the RFID technique.

### BRIEF DESCRIPTION OF THE DRAWINGS

To make the above and other features and advantages more apparent to those skilled in the art, the illustrative embodiments of the present invention will be described in details in the following by referring to the drawings, in which:

Figure 1 is a schematic structural diagram of the present invention;

Figure 2 is a schematic structural diagram of a first embodiment of the present invention;

Figure 3 is a schematic structural diagram of a second embodiment of the present invention; and

Figure 4 is a schematic structural diagram of a third embodiment of the present invention.

### DETAILED DESCRIPTION OF THE INVENTION

The core concept of the present invention is to control the operation status of the radio frequency identification apparatus by setting the radio frequency control unit, thus the radio frequency identification apparatus may be switched between the radio frequency tag status and the radio frequency reader status as required, and the integration of both functions of the radio frequency tag and the radio frequency reader into one apparatus is achieved.

To make the objects, the technical solutions and the advantages of the present invention more clearly to be understood, the present invention will be further described in details in reference to the drawings and in conjunction with the embodiments.

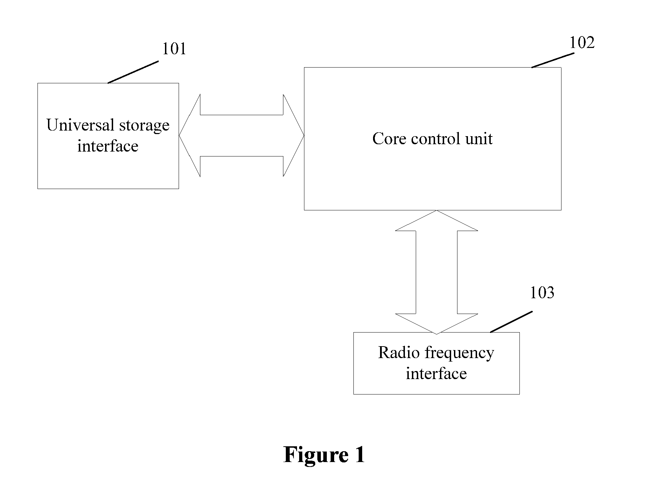

Figure 1 is a schematic structural diagram of the present invention. As shown in Figure 1, the radio frequency identification apparatus of the present invention mainly includes a universal storage interface 101, a core control unit 102, and a radio frequency interface 103; the universal storage interface 101 and the radio frequency interface 103 are connected with the core control unit 102.

The core control unit 102 is adapted to receive a radio frequency identification instruction from another radio frequency identification apparatus within a predetermined range or a portable terminal device through the universal storage interface 10 or the radio frequency interface 103, to perform a corresponding radio frequency identification processing according to the radio frequency identification instruction and a current operation status of the apparatus, and to switch the operation status of the apparatus if the instruction is an operation status switching instruction; the operation status is a radio frequency tag status or a radio frequency reader status.

The radio frequency identification instruction may specifically be a radio frequency control instruction or a radio frequency security identification instruction. The radio frequency control instruction is an instruction from the universal storage interface, for directly controlling the radio frequency control unit to perform radio frequency control operation such as status switching, establishing radio frequency connection, and disconnecting radio frequency connection. Specific way to perform the radio frequency control operation is known to those skilled in the art and will not be described in details herein. The radio frequency security identification instruction is an instruction from the universal storage interface or the radio frequency interface, which will induce corresponding security processing after being parsed, and the processing result will be returned to the universal storage interface or the radio frequency interface.

In the present invention, by setting the current operation status of the apparatus with the core control unit 102, the apparatus may work under the radio frequency tag status to perform the function of the radio frequency tag, and may also work under the radio frequency reader status to perform the function of the radio frequency reader. Here, the specific way to perform corresponding radio frequency identification processing according to the radio frequency identification instruction under a certain operation status is known to those skilled in the art and will not be described in details herein.

The radio frequency interface 103 is adapted to implement information interaction between the core control unit 102 and another radio frequency identification apparatus within the predetermined range; that is to say, the radio frequency interface 103 will forward instructions to the core control unit 102 upon receiving the instructions from another radio frequency identification apparatus, and will forward instructions to the another radio frequency identification apparatus upon receiving the instructions from the core control unit 102.

In practice, the radio frequency interface may be a 14443 interface or an ultra high frequency interface.

The universal storage interface 101 is adapted to implement the information interaction between the portable terminal device and the core control unit 103; that is to say, the universal storage interface 101 will forward instructions to the core control unit 102 upon receiving the instructions from the portable terminal device, and will forward instructions to the portable terminal device upon receiving the instructions from the core control unit 102.

In practice, the universal storage interface is an international standard contact integrated circuit card (IS07816) interface, a multimedia card (MMC) interface, a secure digital memory card (SD) interface, a compact flash card (CF) interface, a smart media card (SM) interface or a universal serial bus (USB) interface. With any of the above interfaces, the radio frequency identification apparatus of the present invention may be implemented in the form of a storage card or an USB disk.

With the above technical solution, the functions of the radio frequency tag and the radio frequency reader may both be integrated into a same apparatus in the present invention.

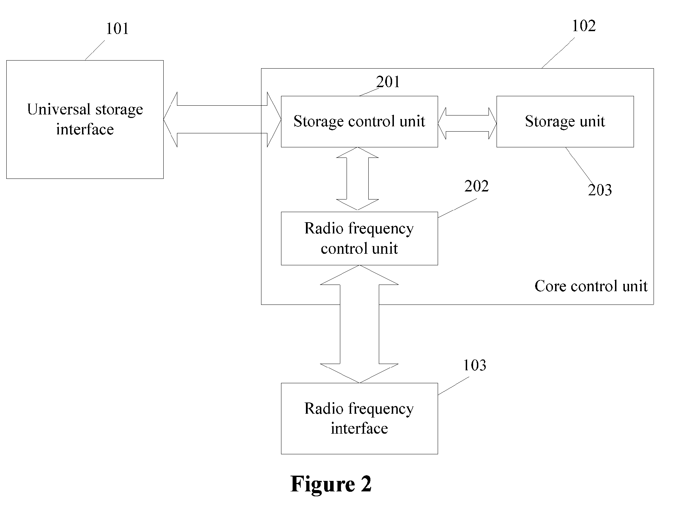

Figure 2 is a schematic structural diagram of a first embodiment of the present invention. As shown in Figure 2, in this embodiment, the apparatus includes a universal storage interface 101, a core control unit 102 and a radio frequency interface 103. The functions of the universal storage interface 101 and the core control unit 102 are the same as mentioned above and will not be described in details. The core control unit 101 includes a storage control unit 201, a storage unit 203 and a radio frequency control unit 202.

The storage control unit 201 is adapted to receive the radio frequency identification instruction from the universal storage interface 101, to parse a radio frequency control instruction and send the parsed radio frequency control instruction to the radio frequency control unit 202 if the radio frequency identification instruction is the radio frequency control instruction, and if the radio frequency identification instruction is a radio frequency security identification instruction, to parse the radio frequency security identification instruction and perform security processing on the parsed radio frequency security identification instruction, and to send the result of the security processing to the radio frequency control unit 202 or the storage unit 203 or to send the result of the security processing to the portable terminal device through the universal storage interface 101; and is adapted to receive a radio frequency security identification instruction from the radio frequency control unit 202, to parse the radio frequency security identification instruction and perform security processing on the parsed radio frequency security identification instruction, and to send the result of the security processing to the radio frequency control unit 202 or the storage unit 203 or to send the result of the security processing to the portable terminal device through the universal storage interface 101.

Here, by performing security processing on the radio frequency security identification instruction, the security of the radio frequency identification apparatus in this embodiment may be improved significantly. In this embodiment, the security processing performed within the storage control unit 201 may be simple security processing such as relatively simple data encryption and decryption, or identity identification, and the specific security processing method may be determined by those skilled in the art according to the practical requirement, which will not be described in details herein.

The radio frequency control unit 202 is adapted to execute the radio frequency control instruction sent by the storage control unit 201, and if the radio frequency control instruction is the operation status switching instruction, to set the operation status of the apparatus according to the switching instruction; is adapted to transmit the radio frequency security identification instruction, which is sent from the radio frequency interface 103 and is originated from the another radio frequency identification apparatus within the predetermined range, to the storage control unit 201; and is adapted to send the result of the security processing fed back by the storage control unit 201 to the another radio frequency identification apparatus within the predetermined range corresponding to the result of the security processing through the radio frequency interface 103.

The storage unit 203 is adapted to provide the storage control unit 201 with data required for operation of the storage control unit 201 or to store a corresponding operation result. In practice, the storage unit may be implemented as the commonly used storage media, such as EEPROM, FLASH or the like.

To enable the apparatus of the first embodiment to provide the function of data access for the portable terminal device connected therewith, the storage control unit 201 is further adapted to receive a data access instruction from the universal storage interface 101 and execute the data access instruction; to receive a security processing instruction from the universal storage interface 101, to perform security processing on the parsed security processing instruction, and to feed the result of the security processing back to the portable terminal device through the universal storage interface 101.

Here, performing of the data access instruction may specifically include: storing the instruction from the universal storage interface 101 into the storage unit 203; or reading data out of the storage unit 203 and returning the data to the universal storage interface 101, where the data may be information to be stored by the portable terminal device, such as trade related information, or personal private information.

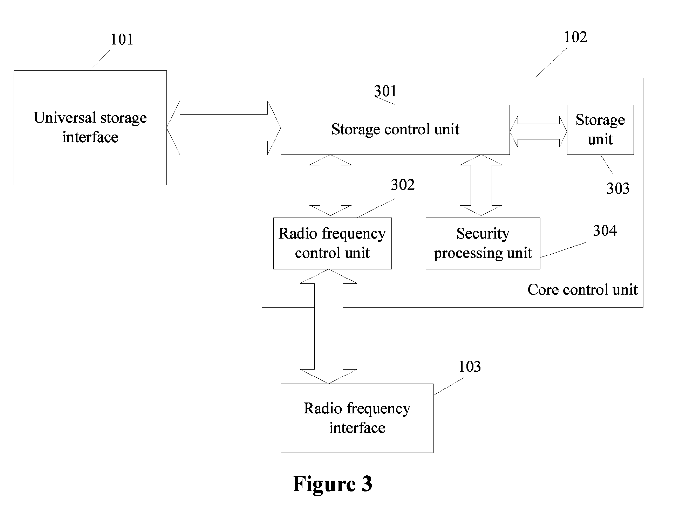

Figure 3 is a schematic structural diagram of a second embodiment of the present invention. In this embodiment, the functions of the universal storage interface 101 and the core control unit 102 are the same as mentioned above, which will not be described in details herein. The second embodiment is different from the first embodiment in that, the core control unit 103 of the radio frequency identification apparatus in the second embodiment includes a storage control unit 301, a storage unit 303, a radio frequency control unit 303 and a security processing unit 304.

The storage control unit 301 is adapted to receive the radio frequency identification instruction from the universal storage interface 101, to parse a radio frequency control instruction and send the parsed radio frequency control instruction to the radio frequency control unit 302 if the radio frequency identification instruction is the radio frequency control instruction, and if the radio frequency identification instruction is a radio frequency security identification instruction, to parse the radio frequency security identification instruction and send the parsed radio frequency security identification instruction to the security processing unit 304 for security processing, and to send the result of the security processing to the radio frequency control unit 302 or the storage unit 303 or to send the result of the security processing to the portable terminal device through the universal storage interface 101; and is adapted to receive a radio frequency security identification instruction from the radio frequency control unit 302, to parse the radio frequency security identification instruction and send the parsed radio frequency security identification instruction to the security processing unit 304 for security processing, and to send the result of the security processing to the radio frequency control unit 302 or the storage unit 303 or to send the result of the security processing to the portable terminal device through the universal storage interface 101.

The radio frequency control unit 302 is adapted to execute the radio frequency control instruction sent by the storage control unit 301, and if the radio frequency control instruction is the operation status switching instruction, to set the operation status of the apparatus according to the switching instruction; is adapted to transmit the radio frequency security identification instruction, which is sent from the radio frequency interface 103 and is originated from the another radio frequency identification apparatus within the predetermined range, to the storage control unit 301; and is adapted to send the result of the security processing fed back by the storage control unit 301 to the another radio frequency identification apparatus within the predetermined range corresponding to the result of the security processing through the radio frequency interface 103.

The security processing unit 304 is adapted to perform security processing on an instruction sent by the storage control unit 301 and feed the result back to the storage control unit 301.

In this embodiment, by replacing the storage control unit 201 in the second embodiment for performing the internal security processing with the security processing unit 304 specialized in security processing, which is capable of relatively advanced security processing operations, such as relatively complicated encryption and decryption, identity identification, digital signature and the like, improved security may be provided when the radio frequency identification apparatus in this embodiment is conducting information interaction with the surroundings. Specifically, the security processing method may be implemented in any security manner by those skilled in the art according to the practical requirement, which will not be described in details herein.

The storage unit 303 is adapted to provide the storage control unit 301 with data required for operation of the storage control unit 301 or to store a corresponding operation result.

To enable the apparatus of the third embodiment to provide the function of data access for the portable terminal device connected therewith, the storage control unit 301 is further adapted to receive a data access instruction from the universal storage interface 101 and execute the data access instruction; to receive a security processing instruction from the universal storage interface 101, to send the parsed security processing instruction to the security processing unit 304 for performing security processing, and to feed the result of the security processing back to the portable terminal device through the universal storage interface 101.

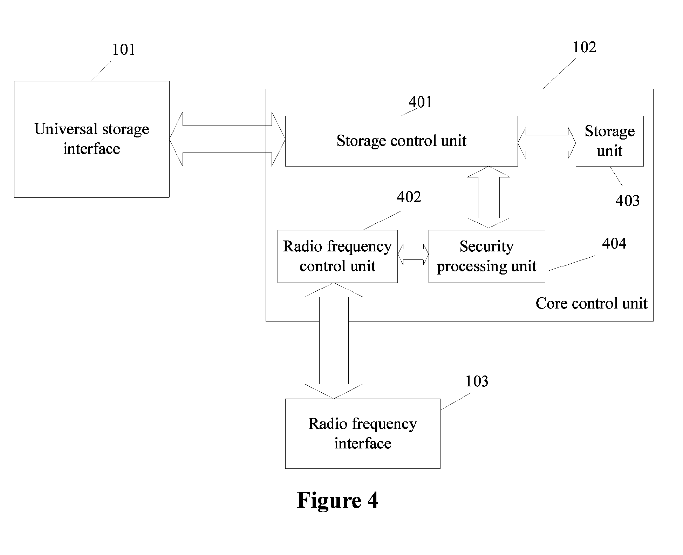

Figure 4 is a schematic structural diagram of a third embodiment of the present invention. In this embodiment, the functions of the universal storage interface 101 and the core control unit 102 are the same as mentioned above, which will not be described in details herein. The third embodiment is different from the above embodiments in that the core control unit 102 in the third embodiment includes a storage control unit 401, a storage unit 403, a radio frequency control unit 402 and a security processing unit 404.

The storage control unit 401 is adapted to receive the radio frequency identification instruction from the universal storage interface 101, to parse a radio frequency control instruction and send the parsed radio frequency control instruction to the security processing unit 404 if the radio frequency identification instruction is the radio frequency control instruction, and if the radio frequency identification instruction is a radio frequency security identification instruction, to parse the radio frequency security identification instruction and send the parsed radio frequency security identification instruction to the security processing unit 404 for security processing, and to send the result of the security processing from the security processing unit 404 to the storage unit 403 or to send the result of the security processing to the portable terminal device through the universal storage interface 101.

The radio frequency control unit 402 is adapted to execute the radio frequency control instruction forwarded by the security processing unit 404, and if the radio frequency control instruction is the operation status switching instruction, to set the operation status of the apparatus according to the switching instruction; is adapted to transmit the radio frequency security identification instruction, which is sent from the radio frequency interface 103 and is originated from the another radio frequency identification apparatus within the predetermined range, to the security processing unit 404; and is adapted to send the result of the security processing sent by the security processing unit 404 to the another radio frequency identification apparatus within the predetermined range corresponding to the result of the security processing through the radio frequency interface 103.

The security processing unit 404 is adapted to perform security processing on the radio frequency security identification instruction sent by the storage control unit 401 or by the radio frequency control unit 402, and to send the result of the security processing to the storage control unit 401 or the radio frequency control unit 402; and is adapted to forward the radio frequency control instruction sent by the storage control unit 401 to the radio frequency control unit 402.

In this embodiment, the security processing unit 404 is connected directly with the radio frequency control unit 402, so that the security processing unit 404 serves as the core module for security control, which is in direct charge of data access of the radio frequency control unit 402, and at meanwhile performs the security processing on the data. When the apparatus works under the radio frequency tag status, upon receiving the operation instruction from the radio frequency interface 103, the security processing unit 404 may directly parse the received operation instruction, and return, through the radio frequency control unit 402 via the radio frequency interface 103, the data corresponding to the operation instruction back to the surrounding radio frequency reader device that sends this operation instruction. Under the radio frequency reader status, the apparatus may perform information interaction with the radio frequency identification apparatus on other terminal devices through the radio frequency interface 103, and the interacted information may be mutually authenticated, encrypted or decrypted directly in the security processing unit 404. Therefore, by directly connecting the security processing unit 404 with the radio frequency control unit 402, the apparatus implemented in this embodiment may be provided with better controllability and higher data processing speed.

In this embodiment, the security processing method is the same as that in the second embodiment, which will not be described in details herein.

The storage unit is adapted to provide the storage control unit with data required for operation of the storage control unit or to store a corresponding operation result.

To enable the apparatus of the first embodiment to provide the function of data access for the portable terminal device connected therewith, the storage control unit 201 is further adapted to receive a data access instruction from the universal storage interface 101 and execute the data access instruction; to receive a security processing instruction from the universal storage interface 101, to send the parsed security processing instruction to the security processing unit 404 for performing security processing, and to feed the result of the security processing back to the portable terminal device through the universal storage interface 101.

The radio frequency identification method implemented by using the radio frequency identification apparatus of the present invention will be described in details in the following by taking the radio frequency identification apparatus implemented by the second embodiment of the present invention as an example, so as to further illustrate the present invention.

The radio frequency identification under the operation status of radio frequency reader status may be implemented by the following process.

The portable terminal device sends the operation status switching instruction to the storage control unit 301 through the universal storage interface 101.

The storage control unit 301 parses the operation status switching instruction and notifies the radio frequency control unit 302 to switch the operation status.

When the operation status is the radio frequency reader status, the radio frequency control unit 302 inquires, in the form of broadcasting, whether there is another radio frequency identification apparatus, which is under the tag status, within the predetermined range from the current position. If there is, the inquired radio frequency identification apparatus(s) returns response information through the radio frequency interface 103, where the response information includes at least the identification number of the inquired radio frequency identification apparatus(s). The radio frequency interface 103 sends the response information to the storage control unit 301. The storage control unit 301 stores the response information into the storage unit 303 and establishes, in the manner of polling according to the response information, a data connection with each inquired radio frequency identification apparatus.

Security processing information is requested from the radio frequency identification apparatus under the tag status through the radio frequency interface 103, and is parsed and then transmitted to the storage control unit 301. The storage control unit 301 transmits the security processing information to the security processing unit 304 for performing corresponding security processing. The security processing unit 304 sends the result of the security processing to the storage control unit 301 according to practical requirement. The storage control unit 301 transmits the result of the security processing to the storage unit 303 for storage. The result of the security processing, after being stored by the storage unit 303, is transmitted firstly to the mobile terminal device through the universal storage interface 101 according to practical requirement, and then transmitted to the radio frequency control unit 302. The radio frequency control unit 302 transmits the result of the security processing to the radio frequency identification apparatus under the tag status through the radio frequency interface 103.

Following completion of the security processing operation with the radio frequency identification apparatus under the tag status, a link-disconnection request is sent through the radio frequency interface 103 to the radio frequency identification apparatus under the tag status.

After a response to the link-disconnection request is received from the radio frequency identification apparatus under the tag status through the radio frequency interface 103, the radio frequency control unit 402 performs the link-disconnection operation with the radio frequency identification apparatus which is under the tag status.

In receipt of operation status switching instruction sent by the mobile terminal device through the universal storage interface 101, the storage control unit 401 parses the switching instruction and then notifies the radio frequency control unit 402 to switch the operation status to the radio frequency tag status, waiting for inquiry from radio frequency identification apparatus under the tag status within the predetermined range.

The radio frequency identification under the operation status of radio frequency tag status may be implemented by the following process.

After being plugged into the mobile terminal device, the radio frequency identification apparatus is powered on and initialized. At this time, the radio frequency identification apparatus is operated under a default operation status, and the default operation status in this embodiment is the radio frequency tag status.

Under the radio frequency tag status, the radio frequency identification apparatus responds to the inquiry instruction sent in the manner of broadcast by the radio frequency identification apparatus under the radio frequency reader status within the predetermined range. The term "responding" refers to the radio frequency identification apparatus under the radio frequency tag status sending its identification number to the radio frequency identification apparatus under the radio frequency reader status. The radio frequency identification apparatus under the radio frequency tag status waits for the radio frequency identification apparatus under the radio frequency reader status to establish connection with it.

After the connection between the radio frequency identification apparatus under the radio frequency tag status and the radio frequency identification apparatus under the radio frequency reader status is established, the radio frequency identification apparatus under the radio frequency tag status sends the security processing information to the radio frequency identification apparatus under the radio frequency reader status, and receives the result of the security processing sent by the radio frequency identification apparatus under the radio frequency reader status. The radio frequency identification apparatus under the radio frequency tag status storages the received result of the security processing.

After the security processing operation has been accomplished, the radio frequency identification apparatus under the radio frequency tag status waits for the radio frequency identification apparatus under the radio frequency reader status to send the disconnection request, and disconnects the connection according to the request. Meanwhile, the radio frequency identification apparatus under the radio frequency tag status waits for the inquiry instruction from other radio frequency identification apparatuses under the radio frequency reader status.

In the above technical solutions, by utilizing the radio frequency control unit to control the rapid switching between the radio frequency reader status and the radio frequency tag status, the functions of the radio frequency tag and the radio frequency reader are both integrated into one radio frequency identification apparatus, so that no modification to the hardware structure of the portable terminal is needed when incorporating the radio frequency identification apparatus into the portable terminal device, which is beneficial for decreasing the cost for combining the radio frequency identification technique with the existing portable terminal device, and facilitates popularization and application of the RFID technique. Furthermore, the wireless networking among multiple terminals having this radio frequency identification apparatus may be implemented based on the present invention, therefore the present invention may found wider usages.

The above are only preferred embodiments of the present invention, but not meant to limit the scope of protection of the present invention. Any modification, equivalent alternative, improvement and the like within the spirit and the principle of the present invention should fall in the scope of protection of the present invention.

## Claims

1. A radio frequency identification apparatus, comprising a radio frequency interface, a core control unit and a universal storage interface, the radio frequency interface and the universal storage interface being connected respectively with the core control unit; wherein:
the core control unit is adapted to receive a radio frequency identification instruction from another radio frequency identification apparatus within a predetermined range or a portable terminal device through the universal storage interface or the radio frequency interface, to perform a corresponding radio frequency identification processing according to the radio frequency identification instruction and a current operation status of the apparatus, and to switch the operation status of the apparatus if the instruction is an operation status switching instruction, wherein the operation status is a radio frequency tag status or a radio frequency reader status;
the radio frequency interface is adapted to implement information interaction between the core control unit and the another radio frequency identification apparatus within the predetermined range; and
the universal storage interface is adapted to implement information interaction between the portable terminal device and the core control unit.

2. The apparatus according to claim 1, wherein the core control unit comprises a storage control unit, a storage unit and a radio frequency control unit; wherein:
the storage control unit is adapted to receive the radio frequency identification instruction from the universal storage interface, to parse a radio frequency control instruction and send the parsed radio frequency control instruction to the radio frequency control unit if the radio frequency identification instruction is the radio frequency control instruction, and if the radio frequency identification instruction is a radio frequency security identification instruction, to parse the radio frequency security identification instruction and perform security processing on the parsed radio frequency security identification instruction, and to send a result of the security processing to the radio frequency control unit or the storage unit or to send the result of the security processing to the portable terminal device through the universal storage interface; and is adapted to receive a radio frequency security identification instruction from the radio frequency control unit, to parse the radio frequency security identification instruction and perform security processing on the parsed radio frequency security identification instruction, and to send the result of the security processing to the radio frequency control unit or the storage unit or to send the result of the security processing to the portable terminal device through the universal storage interface;
the radio frequency control unit is adapted to execute the radio frequency control instruction sent by the storage control unit, and if the radio frequency control instruction is the operation status switching instruction, to set the operation status of the apparatus according to the switching instruction; is adapted to transmit the radio frequency security identification instruction, which is sent from the radio frequency interface and is originated from the another radio frequency identification apparatus within the predetermined range, to the storage control unit; and is adapted to send the result of the security processing fed back by the storage control unit to the another radio frequency identification apparatus within the predetermined range corresponding to the result of the security processing through the radio frequency interface; and
the storage unit is adapted to provide the storage control unit with data required for operation of the storage control unit or to store a corresponding operation result.

3. The apparatus according to claim 2, wherein
the storage control unit is further adapted to receive a data access instruction from the universal storage interface and execute the data access instruction; to receive a security processing instruction from the universal storage interface, to perform security processing on the parsed security processing instruction, and to feed the result of the security processing to the portable terminal device through the universal storage interface.

4. The apparatus according to claim 1, wherein the core control unit comprises a storage control unit, a storage unit, a radio frequency control unit and a security processing unit; wherein:
the storage control unit is adapted to receive the radio frequency identification instruction from the universal storage interface, to parse a radio frequency control instruction and send the parsed radio frequency control instruction to the radio frequency control unit if the radio frequency identification instruction is the radio frequency control instruction, and if the radio frequency identification instruction is a radio frequency security identification instruction, to parse the radio frequency security identification instruction and send the parsed radio frequency security identification instruction to the security processing unit for security processing, and to send the result of the security processing to the radio frequency control unit or the storage unit or to send the result of the security processing to the portable terminal device through the universal storage interface; and is adapted to receive a radio frequency security identification instruction from the radio frequency control unit, to parse the radio frequency security identification instruction and send the parsed radio frequency security identification instruction to the security processing unit for security processing, and to send the result of the security processing to the radio frequency control unit or the storage unit or to send the result of the security processing to the portable terminal device through the universal storage interface;
the radio frequency control unit is adapted to execute the radio frequency control instruction sent by the storage control unit, and if the radio frequency control instruction is the operation status switching instruction, to set the operation status of the apparatus according to the switching instruction; is adapted to transmit the radio frequency security identification instruction, which is sent from the radio frequency interface and is originated from the another radio frequency identification apparatus within the predetermined range, to the storage control unit; and is adapted to send the result of the security processing fed back by the storage control unit to the another radio frequency identification apparatus within the predetermined range corresponding to the result of the security processing through the radio frequency interface;
the security processing unit is adapted to perform the security processing on an instruction sent by the storage control unit and to feed the result back to the storage control unit; and
the storage unit is adapted to provide the storage control unit with data required for operation of the storage control unit or to store a corresponding operation result.

5. The apparatus according to claim 1, wherein the core control unit comprises a storage control unit, a storage unit, a radio frequency control unit and a security processing unit; wherein:
the storage control unit is adapted to receive the radio frequency identification instruction from the universal storage interface, to parse a radio frequency control instruction and send the parsed radio frequency control instruction to the security processing unit if the radio frequency identification instruction is the radio frequency control instruction, and if the radio frequency identification instruction is a radio frequency security identification instruction, to parse the radio frequency security identification instruction and send the parsed radio frequency security identification instruction to the security processing unit for security processing, and to send the result of the security processing from the security processing unit to the storage unit or to send the result of the security processing to the portable terminal device through the universal storage interface;
the radio frequency control unit is adapted to execute the radio frequency control instruction forwarded by the security processing unit, and if the radio frequency control instruction is the operation status switching instruction, to set the operation status of the apparatus according to the switching instruction; is adapted to transmit the radio frequency security identification instruction, which is sent from the radio frequency interface and is originated from the another radio frequency identification apparatus within the predetermined range, to the security processing unit; and is adapted to send the result of the security processing sent by the security processing unit to the another radio frequency identification apparatus within the predetermined range corresponding to the result of the security processing through the radio frequency interface;
the security processing unit is adapted to perform security processing on the radio frequency security identification instruction sent by the storage control unit or by the radio frequency control unit, and to send the result of the security processing to the storage control unit or the radio frequency control unit; and is adapted to forward the radio frequency control instruction sent by the storage control unit to the radio frequency control unit; and
the storage unit is adapted to provide the storage control unit with data required for operation of the storage control unit or to store a corresponding operation result.

6. The apparatus according to claim 4 or 5, wherein:
the storage control unit is further adapted to receive a data access instruction from the universal storage interface and execute the data access instruction; to receive a security processing instruction from the universal storage interface, to send the parsed security processing instruction to the security processing unit for security processing, and to feed the result of the security processing to the portable terminal device through the universal storage interface.

7. The apparatus according to claim 1, wherein the universal storage interface is a international standard contact integrated circuit card (IS07816) interface, a multimedia card (MMC) interface, a secure digital memory card (SD) interface, a compact flash card (CF) interface, a smart media card (SM) interface or a universal serial bus (USB) interface.

8. The apparatus according to claim 1, wherein the radio frequency interface is a 14443 interface or an ultra high frequency interface.
